# EUROPÄISCHE PATENTSCHRIFT

(11) **EP 3 459 726 B1**
(45) Veröffentlichungstag und Bekanntmachung des Hinweises auf die Patenterteilung: **26.08.2020**
(21) Anmeldenummer: 18192147.9
(22) Anmeldetag: 03.09.2018
(51) Int. Cl.: B31F 1/28, B32B 37/12, B32B 37/20, B32B 38/00

(54) **WELLPAPPEANLAGE**
CORRUGATED BOARD SYSTEM
INSTALLATION À CARTONS ONDULÉS

(30) Priorität: 21.09.2017 DE 102017216720
(43) Veröffentlichungstag der Anmeldung: 27.03.2019
(73) Patentinhaber: BHS Corrugated Maschinen- und Anlagenbau GmbH, 92729 Weiherhammer (DE)
(72) Erfinder: Dr. Aumüller, Berthold, 92637 Weiden (DE); Kraus, Helmut, 92442 Wackersdorf (DE); Mark, Maximilian, 95643 Tirschenreuth (DE); Städele, Norbert, 92711 Parkstein (DE)
(74) Vertreter: Rau, Schneck & Hübner Patentanwälte Rechtsanwälte PartGmbB

(56) Entgegenhaltungen:
- EP-A1- 3 147 126
- EP-A2- 1 459 878
- EP-A2- 2 551 117
- DE-A1- 1 924 265
- DE-A1- 2 458 415
- DE-B3-102008 030 955
- GB-A- 2 087 916
- JP-A- 2010 017 886
- US-A- 2 710 045
- US-A- 2 990 173
- US-A- 4 169 007
- US-A- 6 120 199
- US-A1- 2007 137 788
- US-A1- 2011 247 746
- US-A1- 2011 285 799

## Beschreibung

Die Erfindung betrifft eine Wellpappeanlage gemäß dem Oberbegriff des Anspruchs 1.

Wellpappeanlagen mit Druckanordnungen zum Bedrucken von Bahnen sind aus dem Stand der Technik durch offenkundige Vorbenutzung allgemein bekannt. Oftmals ist die Qualität der Bedruckung durch die Druckanordnungen jedoch nicht zufriedenstellend.

Aus der gattungsgemäßen EP 1 459 878 A2 ist eine Wellpappeanlage bekannt, bei der eine Kaschierbahn-bildende Materialbahn durch ein Druckwerk läuft. Die Materialbahn wird bedruckt und wird dann in einer Heiz-Andrückvorrichtung mit einer einseitig kaschierten Wellpappebahn leimend verbunden. Diese bekannte Wellpappeanlage hat sich bewährt. Es ist aber gelegentlich vorgekommen, dass die leimende Verbindung zwischen der einseitig kaschierten Wellpappebahn und einer weiteren Bahn nicht optimal war.

Die DE 1 924 265 A offenbart eine Anordnung mit einer Helio-Druckvorrichtung und einer Vorrichtung zur Herstellung von Riffelungen. In der Helio-Druckvorrichtung wird eine Materialbahn bedruckt. In der Riffelvorrichtung wird eine Materialbahn geriffelt, die auf eine Materialbahn unter Bildung einer einseitig kaschierten Wellpappebahn kaschiert wird.

Eine in der EP 2 551 117 A2 offenbarte Wellpappeanlage umfasst eine Abrollvorrichtung zum Abrollen einer vorbedruckten Materialbahn, die in einer Beleimungsvorrichtung beleimt und mit einer Materialbahn unter Bildung einer Deckbahn leimend verbunden wird. In einer Riffelvorrichtung wird eine Riffelbahn erzeugt. Die Deckbahn und Riffelbahn sowie eine weitere Deckbahn werden unter Bildung einer einseitig kaschierten Wellpappebahn mittels Druckwalzen zusammengedrückt. Beide Deckbahnen sind vor Verbindung mit der Riffelbahn mittels Druckvorrichtungen bedruckbar.

Aus der DE 24 58 415 A1 ist eine Wellpappeanlage bekannt, die eine Brücke umfasst. Während eines Einspleißvorgangs einer Materialbahn kann es wünschenswert sein, eine Wassersprüheinrichtung in Betrieb zu nehmen, damit das Material innerhalb der Brücke nicht zu trocken wird.

Die EP 3 147 126 A1 offenbart eine Wellpappeanlage mit einer dritten Spleißvorrichtung zum Bereitstellen einer endlosen dritten Materialbahn, die bei einer fertigen Wellpappebahn eine äußere Kaschierbahn bildet. Der endlosen dritten Materialbahn ist eine Inkjet-Druckvorrichtung zugeordnet, die außenseitig die endlose dritte Materialbahn bedruckt. In der Inkjet-Druckvorrichtung ist der endlosen dritten Materialbahn eine Befeuchtungseinrichtung zugeordnet, die Wasser auf die endlose dritte Materialbahn führt.

Der Erfindung liegt die Aufgabe zugrunde, eine Wellpappeanlage mit einer Druckanordnung zu schaffen, die einen vergleichsweise kleinen Platzbedarf erfordert. Ferner soll die Druckqualität bzw. Wellpappequalität besonders hoch sein. Die Probleme des Standes der Technik sollen überwunden werden.

Diese Aufgabe wird erfindungsgemäß durch die in dem unabhängigen Anspruch 1 angegebenen Merkmale gelöst.

Ein Merkmal der erfindungsgemäßen Wellpappeanlage liegt darin, dass die Kaschierbahn-Druckanordnung zwischen einer Kaschierbahn-Abgabevorrichtung und einer Vorrichtung zum Herstellen einer zweitseitig bzw. beidseitig kaschierten Wellpappebahn angeordnet ist. Im Betrieb bedruckt die Kaschierbahn-Druckanordnung die geförderte, insbesondere endlose, Kaschierbahn auf mindestens einer Druckseite. Die Kaschierbahn ist bzw. bleibt vorzugsweise eine glatte, ungewellte Bahn. Die zweiseitig kaschierte Wellpappebahn ist mindestens dreilagig, vorzugsweise dreilagig, fünflagig oder siebenlagig.

Die Kaschierbahn-Druckanordnung ist vorteilhafterweise als Digital-Druckanordnung, insbesondere Inkjet-Druckanordnung, ausgebildet. Sie ist vorzugsweise nachrüstbar. Andere bekannte Druckanordnungen sind alternativ einsetzbar.

Die Kaschierbahn-Druckanordnung ist insbesondere im Stande, mindestens einen Buchstaben, eine Ziffer, ein anderes Zeichen, eine Grafik und/oder ein Foto auf die Kaschierbahn aufzudrucken. Dafür wird günstigerweise Farbe bzw. Tinte herangezogen. Es ist von Vorteil, wenn die Kaschierbahn-Druckanordnung im Stande ist, mehrfarbig zu drucken.
Die Kaschierbahn-Druckanordnung weist günstigerweise mehrere in der Querrichtung der Kaschierbahn kaskadiert angeordnete Druckköpfe auf. Vorzugsweise hat die Kaschierbahn-Druckanordnung mehrere hintereinander angeordnete Druckkopfreihen. Es ist von Vorteil, wenn die zu bedruckende Kaschierbahn in der Kaschierbahn-Druckanordnung beim Bedrucken über einen Druckzylinder bzw. Zentralzylinder geführt ist. Der Druckzylinder erstreckt sich vorzugsweise horizontal und senkrecht zu einer Förderrichtung der Kaschierbahn.

Die Vorrichtung zum Herstellen einer einseitig kaschierten, insbesondere endlosen, Wellpappebahn umfasst günstigerweise eine Riffelanordnung zum Riffeln einer zu wellenden Materialbahn unter Bildung einer Wellbahn.

Es ist von Vorteil, wenn die Vorrichtung zum Herstellen einer einseitig kaschierten Wellpappebahn eine Leimauftragseinrichtung zum Beleimen der Wellbahn aufweist.

Günstigerweise gibt eine Deckbahn-Abgabevorrichtung die Deckbahn ab. Es ist von Vorteil, wenn die Deckbahn-Abgabevorrichtung als Splicevorrichtung zum Bereitstellen einer endlosen Deckbahn ausgebildet ist.

Es ist zweckmäßig, wenn die Vorrichtung zum Herstellen einer einseitig kaschierten Wellpappebahn außerdem eine Anpresseinrichtung zum Anpressen der Deckbahn gegen die mit Leim versehene Wellbahn umfasst.

Vorzugsweise gibt eine Materialbahn-Abgabevorrichtung die Materialbahn ab. Günstigerweise ist die Materialbahn-Abgabevorrichtung als Splicevorrichtung zum Bereitstellen einer endlosen Materialbahn ausgebildet.

Die Kaschierbahn-Abgabevorrichtung ist vorzugweise als Splicevorrichtung zum Bereitstellen einer endlosen Kaschierbahn ausgebildet.

Die Vorrichtung zum Herstellen einer zweiseitig kaschierten Wellpappebahn verbindet günstigerweise die mindestens eine einseitig kaschierte Wellpappebahn mit der Kaschierbahn. Sie hat günstigerweise mindestens eine Verpressstrecke beziehungsweise mindestens einen Verpressspalt, die/der kleiner als 15 Meter, bevorzugter kleiner als 10 Meter, ist. Die Vorrichtung zum Herstellen einer zweiseitig kaschierten Wellpappebahn umfasst günstigerweise mindestens zwei paarweise angeordnete, benachbart zueinander angeordnete, insbesondere antreibbare, Verpresswalzen bzw. Verpressgurte. Durch die Verpressstrecke sind die mindestens eine einseitig kaschierte Wellpappebahn und die Kaschierbahn geführt und werden dort aneinander gepresst. Zwischen den Bahnen befindet sich vorzugsweise Leim zur leimenden Verbindung derselben.

Die Wellpappeanlage hat aufgrund der Anordnung der Kaschierbahn-Druckanordnung unter der Brücke einen vergleichsweise geringen Platzbedarf. Insbesondere ist deren Länge vergleichsweise kurz. Ferner ist so die Kaschierbahn-Druckanordnung keinen/kaum äußeren störenden Einflüssen, wie durch die Vorrichtung zum Herstellen einer einseitig kaschierten Wellpappebahn erzeugten Schwingungen, ausgesetzt.

Die Brücke der Wellpappeanlage hat günstigerweise ein Brückenniveau von mindestens 4 Meter bezogen auf einen Boden bzw. Untergrund. Vorzugsweise hat sie zumindest benachbart zu der Kaschierbahn-Druckanordnung einen aufgeständerten Brückenabschnitt. Die Brücke hat insgesamt günstigerweise eine Länge, die kleiner als 35 Meter ist.

Die mindestens eine Abschirmanordnung erstreckt sich günstigerweise zumindest bereichsweise längs der Brücke in einer Förderrichtung der mindestens einen dort geförderten einseitig kaschierten Wellpappebahn. Sie erstreckt sich in der Förderrichtung vorzugsweise über mindestens 10 Meter. Sie ist vorzugsweise aus einem Metallmaterial bzw. Dämmmaterial gebildet.

Die hier verwendeten Ausdrücke "vorgeordnet", "nachgeordnet", "stromaufwärts", "stromabwärts", "hintereinander" oder dergleichen beziehen sich insbesondere auf die Förderrichtung der jeweiligen geförderten Bahn.

Ein nicht erfindungsgemäßes Verfahren zum Herstellen von Wellpappe umfasst bevorzugt den Schritt
- Auftragen von Leim mittels eines Leimwerks auf freie Spitzen von mindestens einer einseitig kaschierten Wellpappebahn zur leimenden Verbindung derselben mit einer weiteren Bahn zur Bildung einer zweiseitig kaschierten Wellpappebahn, wobei der Leim Verarbeitungstemperaturen von unter 70 °C erlaubt, die günstigerweise zumindest an der mindestens einen einseitig kaschierten Wellpappebahn und/oder an der Kaschierbahn vorliegen.

Die Verarbeitungstemperaturen des Leims von unter 70 °C führen dazu, dass besonders wenig Energie zur Herstellung der Wellpappe benötigt wird. Ferner werden die zu beleimenden bzw. zu verbindenden Bahnen geschont. Der Leim hat eine vergleichsweise niedrige Abbindetemperatur bzw. Aushärtetemperatur.

Insbesondere erfolgt eine Abbindung bzw. Aushärtung des Leims beim Auftragen desselben auf die mindestens eine einseitig kaschierte Wellpappebahn bzw. unmittelbar danach, deren Leim-Aufnahmegebiet vorzugsweise eine Temperatur aufweist, die zur Abbindung, Aushärtung bzw. Trocknung des Leims ausreichend ist. Bereiche des Leims bzw. von Leimlinien erfahren dabei günstigerweise sowohl bei dem Leimauftrag als auch danach Temperaturen von unter 70 °C. Die Verarbeitungstemperaturen liegen günstigerweise an der mindestens einen einseitig kaschierten Wellpappebahn vor. Insbesondere ist die Kaschierbahn durch die Kaschierbahn-Druckanordnung entsprechend erwärmt. Beispielsweise erfolgt eine entsprechende Erwärmung der Kaschierbahn durch mindestens eine der Kaschierbahn zugeordnete Bedruckungs-Trocknungsvorrichtung der Kaschierbahn-Druckanordnung.

Weitere vorteilhafte Ausgestaltungen der Erfindung sind in den Unteransprüchen angegeben.

Die Wellpappeanlage gemäß dem Unteranspruch 2 ist besonders einfach ausgebildet. Die mindestens eine Vorrichtung zum Herstellen einer jeweiligen einseitig kaschierten Wellpappebahn und die Kaschierbahn-Abgabevorrichtung sowie die Kaschierbahn-Druckanordnung sind günstigerweise hintereinander angeordnet bzw. einander nachgeordnet. Eine derartige Wellpappeanlage hat somit quer zu einer Förderrichtung eine äußerst geringe Breite. Die Kaschierbahn-Druckanordnung befindet sich insbesondere innerhalb der eigentlichen Wellpappeanlage.

Die mindestens eine Abschirmanordnung gemäß dem Unteranspruch 3 ist vorzugsweise seitlich und nach oben geschlossen. Sie ist vorzugsweise als Einhausung bzw. Umhausung ausgeführt. Dies verhindert besonders wirksam eine Austrocknung der mindestens einen einseitig kaschierten Wellpappebahn in der Brücke.

Eine Brücke weist vorzugsweise eine Bahnlauf-Korrekturanordnung zur Korrektur eines Bahnlaufs der mindestens einen einseitig kaschierten Wellpappebahn in der Brücke auf, wobei die Bahnlauf-Korrekturanordnung einen geringeren horizontalen Abstand zu der Vorrichtung zum Herstellen einer zweiseitig kaschierten Wellpappebahn als die Kaschierbahn-Druckanordnung aufweist.

Diese Anordnung führt zu einer äußerst hohen Wellpappequalität. Insbesondere ist so die mindestens eine einseitig kaschierte Wellpappebahn in ihrer Position bzw. Lage an die Kaschierbahn anpassbar bzw. angleichbar.

Die Wellpappeanlage umfasst bevorzugt eine Wendeanordnung zum Richten einer Druckseite der Kaschierbahn nach unten, wobei die Wendeanordnung der Kaschierbahn-Druckanordnung nachgeordnet und der Vorrichtung zum Herstellen einer zweiseitig kaschierten Wellpappebahn vorgeordnet ist.

Diese Ausgestaltung ermöglicht ein einfaches Bedrucken der Kaschierbahn. Die Kaschierbahn ist in der Kaschierbahn-Druckanordnung insbesondere von oben bedruckbar. Die Wendeanordnung ist insbesondere einer Kaschierbahn-Druckvorrichtung der Kaschierbahn-Druckanordnung nachgeordnet.

Die Wendeanordnung weist günstigerweise mindestens eine vertikal verlaufende Wendestange auf, die vorzugsweise zur Korrektur eines Bahnlaufs der Kaschierbahn horizontal verlagerbar ist. Diese Wendeanordnung erlaubt eine besonders einfache Korrektur des Bahnlaufs der Kaschierbahn bzw. seitliche Auslenkung derselben. Dies führt wieder zu einer besonders hohen Wellpappequalität.

Eine Ausgestaltung ohne Wendeanordnung ist alternativ möglich.

Es ist von Vorteil, wenn mindestens eine Rückbefeuchtungsvorrichtung zum Rückbefeuchten der Kaschierbahn der Kaschierbahn-Druckanordnung nachgeordnet und der Vorrichtung zum Herstellen einer zweiseitig kaschierten Wellpappebahn vorgeordnet ist. Die mindestens eine Rückbefeuchtungsvorrichtung führt zu einer äußerst hohen Planlage der Kaschierbahn und besonders guten Verklebung der Kaschierbahn mit einer benachbarten einseitig kaschierten Wellpappebahn in der Vorrichtung zum Herstellen einer zweiseitig kaschierten Wellpappebahn. Insbesondere sorgt die mindestens eine Rückbefeuchtungsvorrichtung für eine Rückbefeuchtung von mindestens 5 ml/m².

Vorzugsweise ist ein Leimwerk zum Beleimen der mindestens einen einseitig kaschierten Wellpappebahn mit Leim vorhanden, wobei das Leimwerk der Kaschierbahn-Druckanordnung nachgeordnet und, insbesondere unmittelbar, benachbart zu der Kaschierbahn-Druckanordnung angeordnet ist, insbesondere derart, dass die Kaschierbahn-Druckanordnung die Kaschierbahn derart erwärmt, dass der durch das Leimwerk aufgebrachte Leim abbindet.

Diese Wellpappeanlage hat einen vergleichsweise geringen Platzbedarf. Ferner ist deren Energiebedarf vergleichsweise gering. Insbesondere ist auf eine Vorheizanordnung zum Vorheizen der mindestens einen einseitig kaschierten Wellpappebahn und/oder der Kaschierbahn, insbesondere unmittelbar, stromaufwärts zu der Vorrichtung zum Herstellen einer zweiseitig kaschierten Wellpappebahn bzw. zu dem Leimwerk verzichtbar. Dies ist insbesondere darauf zurückzuführen, dass zwischen der Bedruckung durch die Kaschierbahn-Druckvorrichtung und der Vorrichtung zum Herstellen einer zweiseitig kaschierten Wellpappebahn eine besonders kurze Strecke vorliegt. Günstigerweise ist ein Abstand zwischen der Kaschierbahn-Druckanordnung bzw. Kaschierbahn-Druckvorrichtung und dem Leimwerk kleiner als 5 m. Die Kaschierbahn-Druckanordnung hat beispielsweise mindestens ein eigenes Heizelement zum Erwärmen der Kaschierbahn. Das Leimwerk kann auch Gegenstand eines eigenständigen Erfindungsgegenstands sein.

Der in dem Leimwerk eingesetzte Leim erlaubt bevorzugt Verarbeitungstemperaturen von unter 70° C.

Dieser Leim ist bereits bei vergleichsweise geringen Temperaturen verarbeitbar, was auch zu niedrigen Betriebskosten führt.

Die Kaschierbahn-Druckanordnung erwärmt vorzugsweise die Kaschierbahn derart, dass diese in der Vorrichtung zum Herstellen einer zweiseitig kaschierten Wellpappebahn mit der benachbarten einseitig kaschierten Wellpappebahn leimend verbindbar ist.

Günstigerweise erwärmt die Kaschierbahn-Druckanordnung bzw. mindestens eine Kaschierbahn-Druckvorrichtung beim Bedrucken die Kaschierbahn zumindest bereichsweise auf maximal 120 °C, bevorzugter auf 50 °C bis 70 °C. Günstigerweise erfolgt eine derartige Erwärmung bei einer Bedruckungstrocknung.

Die Wellpappeanlage umfasst bevorzugt mindestens eine Wärmeschutzanordnung zum Schutz einer Kaschier-Druckvorrichtung der Kaschierbahn-Druckanordnung vor Wärmeeintrag.

Die mindestens eine Wärmeschutzanordnung umfasst günstigerweise ein Wärmeschutz- bzw. Wärmedämmmaterial. Sie erstreckt sich vorzugweise zwischen der Kaschierbahn-Druckvorrichtung und einer Trocknungsvorrichtung der Kaschierbahn-Druckanordnung. Dies führt zu einer hohen Druckqualität.

Die Wellpappeanlage umfasst bevorzugt eine Kaschierbahn-Lauf-Korrektureinrichtung zur Korrektur eines Bahnlaufs der Kaschierbahn.

Diese Ausgestaltung führt wieder zu einer besonders hohen Wellpappequalität. Insbesondere ist so eine besonders gute Anpassung bzw. Angleichung der Kaschierbahn an die mindestens eine einseitig kaschierte Wellpappebahn möglich. Die Kaschierbahn ist dazu günstigerweise seitlich auslenkbar. Die Kaschierbahn-Lauf-Korrektureinrichtung ist vorzugsweise der Vorrichtung zum Herstellen einer zweiseitig kaschierten Wellpappebahn bzw. einem Leimwerk vorgeordnet. Sie ist günstigerweise einer Kaschierbahn-Druckvorrichtung nachgeordnet.

Die Kaschierbahn-Lauf-Korrektureinrichtung umfasst bevorzugt mindestens eine verschwenkbare Schwenkwalze. Die Bahnlauf-Korrektureinrichtung ist besonders einfach ausgeführt. Die mindestens eine Schwenkwalze ist günstigerweise als Kamberoller ausgeführt. Sie erstreckt sich vorzugsweise über eine Breite der Kaschierbahn. Die Kaschierbahn liegt vorzugsweise umfangsseitig an der mindestens einen Schwenkwalze an. Die mindestens eine Schwenkwalze ist vorzugsweise zur Beeinflussung des Bahnlaufs der Kaschierbahn gegenüber der Kaschierbahn auslenkbar.

Die Bahnlauf-Korrektureinrichtung ist günstigerweise einer Vorbeschichtungs-Auftragsvorrichtung nachgeordnet.

Nachfolgend werden unter Bezugnahme auf die beigefügte Zeichnung zwei bevorzugte Ausführungsformen der Erfindung beispielhaft beschrieben. Dabei zeigen:
- Fig. 1: eine schematische Seitenansicht einer erfindungsgemäßen Wellpappeanlage,

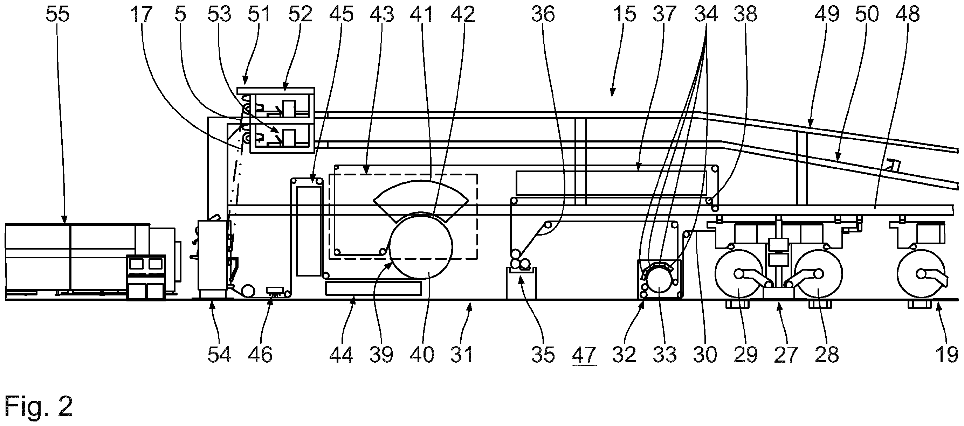

- Fig. 2: einen vergrößerten Ausschnitt aus Fig. 1, der insbesondere die Kaschierbahn-Druckanordnung und zu dieser benachbarte Komponenten der Wellpappeanlage veranschaulicht,
- Fig. 3: eine Fig. 1 entsprechende Seitenansicht einer erfindungsgemäßen Wellpappeanlage gemäß einer zweiten Ausführungsform, und
- Fig. 4: einen Fig. 2 entsprechenden Ausschnitt der Wellpappeanlage gemäß Fig. 3.

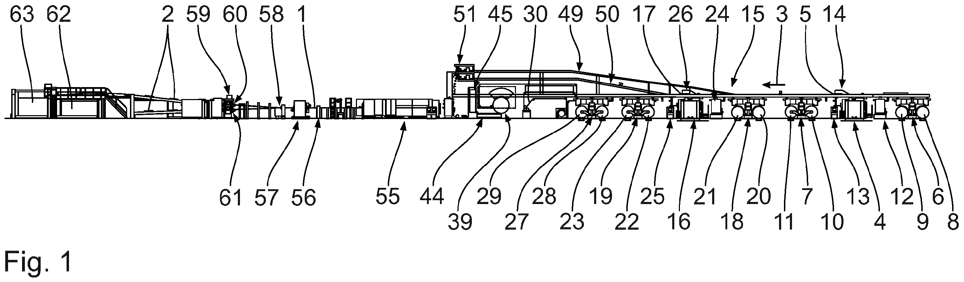

Eine in Fig. 1 in ihrer Gesamtheit gezeigte Wellpappeanlage ist im Stande, eine endlose fünflagige Wellpappebahn 1 bzw. fünflagige Wellpappebögen 2 herzustellen. Die Wellpappeanlage ist insgesamt länglich ausgeführt. Sie erstreckt sich im Wesentlichen gerade einer Längsrichtung bzw. Förderrichtung 3.

Die Wellpappeanlage umfasst eine erste Vorrichtung 4 zum Herstellen einer einseitig kaschierten ersten Wellpappebahn 5.

Der ersten Vorrichtung 4 zum Herstellen einer einseitig kaschierten ersten Wellpappebahn 5 sind eine erste Deckbahn-Splicevorrichtung 6 und eine erste Materialbahn-Splicevorrichtung 7 vorgeordnet.

Die erste Deckbahn-Splicevorrichtung 6 umfasst zum Abrollen einer endlichen ersten Deckbahn von einer ersten Deckbahnrolle 8 eine erste Abrolleinheit und zum Abrollen einer endlichen zweiten Deckbahn von einer zweiten Deckbahnrolle 9 eine zweite Abrolleinheit. Die endliche erste Deckbahn und die endliche zweite Deckbahn werden zum Bereitstellen einer endlosen ersten Deckbahn in der ersten Deckbahn-Splicevorrichtung 6 miteinander verbunden.

Die erste Materialbahn-Splicevorrichtung 7 ist entsprechend der ersten Deckbahn-Splicevorrichtung 6 ausgebildet. Diese umfasst zum Abrollen einer endlichen ersten Materialbahn von einer ersten Materialbahnrolle 10 eine dritte Abrolleinheit und zum Abrollen einer endlichen zweiten Materialbahn von einer zweiten Materialbahnrolle 11 eine vierte Abrolleinheit. Die endliche erste Materialbahn und die endliche zweite Materialbahn werden zum Bereitstellen einer endlosen ersten Materialbahn in der ersten Materialbahn-Splicevorrichtung 7 miteinander verbunden.

Die endlose erste Deckbahn wird über eine erste Heizanordnung 12 der ersten Vorrichtung 4 zum Herstellen einer einseitig kaschierten ersten Wellpappebahn 5 zugeführt, während die endlose erste Materialbahn über eine erste Umlenkanordnung 13 der ersten Vorrichtung 4 zum Herstellen einer einseitig kaschierten ersten Wellpappebahn 5 zugeführt wird.

Die erste Vorrichtung 4 zum Herstellen einer einseitig kaschierten ersten Wellpappebahn 5 umfasst zum Erzeugen einer eine Wellung aufweisenden endlosen ersten Wellbahn aus der endlosen ersten Materialbahn eine drehbar gelagerte erste Riffelwalze und eine drehbar gelagerte zweite Riffelwalze. Die Riffelwalzen bilden zum Durchführen und Riffeln der endlosen ersten Materialbahn einen ersten Walzenspalt aus. Sie bilden zusammen eine erste Riffelanordnung.

Zum Verbinden der endlosen ersten Wellbahn mit der endlosen ersten Deckbahn zu der einseitig kaschierten ersten Wellpappebahn 5 weist die erste Vorrichtung 4 zum Herstellen einer einseitig kaschierten ersten Wellpappebahn 5 eine erste Leimauftragseinrichtung auf, die eine erste Leimdosierwalze, einen ersten Leimbehälter und eine erste Leimauftragswalze umfasst. Zum Durchführen und Beleimen der endlosen ersten Wellbahn bildet die erste Leimauftragswalze mit der ersten Riffelwalze einen ersten Spalt aus. Der sich in dem ersten Leimbehälter befindende Leim wird über die erste Leimauftragswalze auf Spitzen der Wellung der endlosen ersten Wellbahn aufgetragen. Die erste Leimdosierwalze liegt gegen die erste Leimauftragswalze an und dient zum Ausbilden einer gleichmäßigen Leimschicht auf der ersten Leimauftragswalze.

Die endlose erste Deckbahn wird anschließend mit der mit Leim aus dem ersten Leimbehälter versehenen endlosen ersten Wellbahn in der ersten Vorrichtung 4 zum Herstellen einer einseitig kaschierten ersten Wellpappebahn 5 zusammengefügt.

Zum Anpressen der endlosen ersten Deckbahn gegen die mit Leim versehene, endlose erste Wellbahn, die wiederum bereichsweise an der ersten Riffelwalze anliegt, hat die erste Vorrichtung 4 zum Herstellen einer einseitig kaschierten ersten Wellpappebahn 5 ein erstes Anpressmodul. Das erste Anpressmodul ist günstigerweise als Anpressbahnmodul ausgeführt. Es ist oberhalb der ersten Riffelwalze angeordnet. Das erste Anpressmodul hat zwei erste Umlenkwalzen sowie ein endloses erstes Anpressband, das um die beiden ersten Umlenkwalzen geführt ist.

Die erste Riffelwalze greift in einen zwischen den beiden ersten Umlenkwalzen vorliegenden Raum bereichsweise von unten ein, wodurch das erste Anpressband durch die erste Riffelwalze umgelenkt wird. Das erste Anpressband drückt gegen die endlose erste Deckbahn, die wiederum gegen die mit Leim versehene, an der ersten Riffelwalze anliegende endlose erste Wellbahn gepresst wird.

Zum weiteren Fördern der einseitig kaschierten ersten Wellpappebahn 5 wird diese über eine erste Hochtransporteinrichtung 14 einer Brücke 15 der Wellpappeanlage zugeführt. Die Brücke 15 kann auch zum Zwischenspeichern und Puffern der einseitig kaschierten ersten Wellpappebahn 5 dienen.

Die Wellpappeanlage umfasst außerdem eine zweite Vorrichtung 16 zum Herstellen einer einseitig kaschierten zweiten Wellpappebahn 17.

Der zweiten Vorrichtung 16 zum Herstellen einer einseitig kaschierten zweiten Wellpappebahn 17 sind eine zweite Deckbahn-Splicevorrichtung 18 und eine zweite Materialbahn-Splicevorrichtung 19 vorgeordnet.

Die zweite Deckbahn-Splicevorrichtung 18 ist wie die erste Deckbahn-Splicevorrichtung 6 ausgebildet. Diese umfasst zum Abrollen einer endlichen dritten Deckbahn von einer dritten Deckbahnrolle 20 eine fünfte Abrolleinheit und zum Abrollen einer endlichen vierten Deckbahn von einer vierten Deckbahnrolle 21 eine sechste Abrolleinheit. Die endliche dritte Deckbahn und vierte Deckbahn werden zum Bereitstellen einer endlosen zweiten Deckbahn in der zweiten Deckbahn-Splicevorrichtung 18 miteinander verbunden.

Die zweite Materialbahn-Splicevorrichtung 19 ist wie die erste Materialbahn-Splicevorrichtung 7 ausgebildet. Diese umfasst zum Abrollen einer endlichen dritten Materialbahn von einer dritten Materialbahnrolle 22 eine siebte Abrolleinheit und zum Abrollen einer endlichen vierten Materialbahn von einer vierten Materialbahnrolle 23 eine achte Abrolleinheit. Die endliche dritte Materialbahn und vierte Materialbahn werden zum Bereitstellen einer endlosen zweiten Materialbahn in der zweiten Materialbahn-Splicevorrichtung 19 miteinander verbunden.

Die endlose zweite Deckbahn wird über eine zweite Heizanordnung 24 der zweiten Vorrichtung 16 zum Herstellen einer einseitig kaschierten zweiten Wellpappebahn 17 zugeführt, während die endlose zweite Materialbahn über eine zweite Umlenkanordnung der zweiten Vorrichtung 16 zum Herstellen einer einseitig kaschierten zweiten Wellpappebahn 17 zugeführt wird.

Die zweite Vorrichtung 16 zum Herstellen einer einseitig kaschierten zweiten Wellpappebahn 17 ist entsprechend der ersten Vorrichtung 4 zum Herstellen einer einseitig kaschierten ersten Wellpappebahn 5 ausgebildet. Diese umfasst zum Erzeugen einer eine Wellung aufweisenden endlosen zweiten Wellbahn aus der endlosen zweiten Materialbahn eine drehbar gelagerte dritte Riffelwalze und eine drehbar gelagerte vierte Riffelwalze. Die Riffelwalzen bilden zum Durchführen und Riffeln der endlosen zweiten Materialbahn einen zweiten Walzenspalt aus. Sie bilden zusammen eine zweite Riffelanordnung.

Zum Verbinden der endlosen zweiten Wellbahn mit der endlosen zweiten Deckbahn zu der einseitig kaschierten zweiten Wellpappebahn 17 weist die zweite Vorrichtung 16 zum Herstellen einer einseitig kaschierten zweiten Wellpappebahn 17 eine zweite Leimauftragseinrichtung auf, die eine zweite Leimdosierwalze, einen zweiten Leimbehälter und eine zweite Leimauftragswalze umfasst. Zum Durchführen und Beleimen der endlosen zweiten Wellbahn bildet die zweite Leimauftragswalze mit der dritten Riffelwalze einen zweiten Spalt aus. Der sich in dem zweiten Leimbehälter befindende Leim wird über die zweite Leimauftragswalze auf Spitzen der Wellung der endlosen zweiten Wellbahn aufgetragen. Die zweite Leimdosierwalze liegt gegen die zweite Leimauftragswalze an und dient zum Ausbilden einer gleichmäßigen Leimschicht auf der zweiten Leimauftragswalze.

Die endlose zweite Deckbahn wird anschließend mit der mit Leim aus dem zweiten Leimbehälter versehenen endlosen zweiten Wellbahn in der zweiten Vorrichtung 16 zum Herstellen einer einseitig kaschierten zweiten Wellpappebahn 17 zusammengefügt.

Zum Anpressen der endlosen zweiten Deckbahn gegen die mit Leim versehene, endlose zweite Wellbahn, die wiederum bereichsweise an der dritten Riffelwalze anliegt, hat die zweite Vorrichtung 16 zum Herstellen einer einseitig kaschierten zweiten Wellpappebahn 17 ein zweites Anpressmodul. Das zweite Anpressmodul ist günstigerweise als Anpressbandmodul ausgeführt. Es ist oberhalb der dritten Riffelwalze angeordnet. Das zweite Anpressmodul hat zwei zweite Umlenkwalzen sowie ein endloses zweites Anpressband, das um die beiden zweiten Umlenkwalzen geführt ist.

Die dritte Riffelwalze greift in einen zwischen den beiden zweiten Umlenkwalzen vorliegenden Raum bereichsweise von unten ein, wodurch das zweite Anpressband durch die dritte Riffelwalze umgelenkt wird. Das zweite Anpressband drückt gegen die endlose zweite Deckbahn, die wiederum gegen die mit Leim versehene, an der dritten Riffelwalze anliegende endlose zweite Wellbahn gepresst wird.

Zum weiteren Fördern der einseitig kaschierten zweiten Wellpappebahn 17 wird diese über eine zweite Hochtransporteinrichtung 26 der Brücke 15 zugeführt. Die Brücke 15 kann auch zum Zwischenspeichern und Puffern der einseitig kaschierten zweiten Wellpappebahn 17 dienen.

Ferner hat die Wellpappeanlage eine Kaschierbahn-Splicevorrichtung 27, die wie die übrigen Splicevorrichtungen 6, 7, 18 bzw. 19 ausgebildet ist. Die Kaschierbahn-Splicevorrichtung 27 umfasst zum Abrollen einer endlichen ersten Kaschierbahn von einer ersten Kaschierbahnrolle 28 eine neunte Abrolleinheit und zum Abrollen einer endlichen zweiten Kaschierbahn von einer zweiten Kaschierbahnrolle 29 eine zehnte Abrolleinheit. Die endliche erste Kaschierbahn und die endliche zweite Kaschierbahn werden zum Bereitstellen einer endlosen Kaschierbahn 30 in der Kaschierbahn-Splicevorrichtung 27 miteinander verbunden. Die endlose Kaschierbahn 30 ist einlagig.

Stromabwärts in Bezug auf die Kaschierbahn 30 ist zu der Kaschierbahn-Splicevorrichtung 27 eine Kaschierbahn-Druckanordnung 31 zum Bedrucken der Kaschierbahn 30 angeordnet.

Die Kaschierbahn-Druckanordnung 31 umfasst eine Corona-Vorbehandlungsvorrichtung 32, die eingangsseitig bzw. benachbart zu der Kaschierbahn-Splicevorrichtung 27 angeordnet ist. Die Corona-Vorbehandlungsvorrichtung 32 steht auf einem Boden bzw. Untergrund. Sie umfasst eine Corona-Trägerwalze 33 und mindestens eine benachbart zu dieser angeordnete Elektrode 34. Die Corona-Trägerwalze 33 erstreckt sich horizontal und senkrecht zu einer Förderrichtung 3 der endlosen Kaschierbahn 30. Um die Corona-Trägerwalze 33 ist die endlose Kaschierbahn 30 geführt. Die endlose Kaschierbahn 30 läuft dabei durch einen Spalt, der durch die Corona-Trägerwalze 33 und die mindestens eine Elektrode 34 gebildet bzw. begrenzt ist. Durch die Corona-Vorbehandlungsvorrichtung 32 wird die endlose Kaschierbahn 30 einer elektrischen Corona-Entladung ausgesetzt, was zu einer Oxidation deren Oberfläche, insbesondere an der Druckseite, führt. Dies ergibt höhere Punktzuwächse bei einem späteren Farbauftrag bzw. Bedrucken. Die Haftung einer Druckfarbe auf der endlosen Kaschierbahn 30 ist so verbesserbar.

Die Kaschierbahn-Druckanordnung 31 hat außerdem eine Vorbeschichtungs-Auftragsvorrichtung 35, die in Bezug auf die endlose Kaschierbahn 30 der Corona-Vorbehandlungsvorrichtung 32 nachgeordnet ist und auf einem Boden bzw. Untergrund steht. Die Vorbeschichtungs-Auftragsvorrichtung 35 ist der endlosen Kaschierbahn 30 zugeordnet und ist im Stande, auf eine Außenseite bzw. Druckseite 36 der Kaschierbahn 30 eine flächige Vorbeschichtung aufzubringen. Die Vorbeschichtungs-Auftragsvorrichtung 35 nutzt dazu günstigerweise mindestens eine Vorbeschichtungswalze, die sich horizontal und senkrecht zu der Förderrichtung 3 der endlosen Kaschierbahn 30 erstreckt. Die mindestens eine Vorbeschichtungswalze ist vorzugsweise in ein auftragbares Vorbeschichtungsmittel eingetaucht.

Die Kaschierbahn-Druckanordnung 31 weist ferner eine Vorbeschichtungs-Trocknungsvorrichtung 37 auf, die in Bezug auf die endlose Kaschierbahn 30 der Vorbeschichtungs-Auftragsvorrichtung 35 nachgeordnet ist und außenseitig die Vorbeschichtung bzw. endlose Kaschierbahn 30 trocknet. Die Vorbeschichtungs-Trocknungsvorrichtung 37 verläuft horizontal. Sie ist oberhalb der Corona-Vorbehandlungsvorrichtung 32 und der Vorbeschichtungs-Auftragsvorrichtung 35 angeordnet. Günstigerweise hat die Vorbeschichtungs-Trocknungsvorrichtung 37 hintereinander bzw. in Reihe angeordnete Vorbeschichtungs-Trocknungseinrichtungen.

Die Kaschierbahn-Druckanordnung 31 hat stromabwärts zu der Vorbeschichtungs-Trocknungsvorrichtung 37 in Bezug auf die endlose Kaschierbahn 30 eine Schwenkwalze 38, die eine Kaschierbahn-Lauf-Korrektureinrichtung bildet und benachbart zu der Vorbeschichtungs-Trocknungsvorrichtung 37 angeordnet ist. Die endlose Kaschierbahn 30 ist um die Schwenkwalze 38 geführt. Die Schwenkwalze 38 erstreckt sich in einer Querrichtung bzw. Breitenrichtung der endlosen Kaschierbahn 30. Sie verläuft vorzugsweise horizontal. Der Winkel der Schwenkwalze 38 in Bezug auf die endlose Kaschierbahn 30 bzw. deren Förderrichtung 3 ist veränderbar, was zu einer entsprechenden seitlichen Auslenkung der geförderten endlosen Kaschierbahn 30 führt.

Die Kaschierbahn-Druckanordnung 31 weist ferner eine Inkjet-Druckvorrichtung 39 auf, die in Bezug auf die endlose Kaschierbahn 30 der Schwenkwalze 38 nachgeordnet ist. Die Inkjet-Druckvorrichtung 39 ist der endlosen Kaschierbahn 30 zugeordnet und ist im Stande, außenseitig auf die endlose Kaschierbahn 30 bzw. auf die getrocknete Vorbeschichtung mindestens einen Aufdruck aufzudrucken. Die Vorbeschichtung befindet sich somit zwischen dem mindestens einen Aufdruck und der endlosen Kaschierbahn 30. Der mindestens eine Aufdruck ist günstigerweise ein Farbaufdruck. Er befindet sich auf der Druckseite der endlosen Kaschierbahn 30.

Die Inkjet-Druckvorrichtung 39 umfasst einen Zentralzylinder 40, der sich senkrecht zu der Förderrichtung 3 der Kaschierbahn 30 und horizontal merstreckt. Ferner hat die Inkjet-Druckvorrichtung 39 einen Drückköpfe aufweisenden Inkjet-Druckriegel 41, der sich bereichsweise um den Zentralzylinder 40 beabstandet unter Bildung eines Druckspalts 42 erstreckt. Die endlose Kaschierbahn 30 ist zur außenseitigen Bedruckung durch den Druckspalt 42 geführt.

Die Inkjet-Druckvorrichtung 39 ist zumindest größtenteils in einer gehäuseartigen Wärmeschutzanordnung 43 angeordnet. Insbesondere ist der Inkjet-Druckriegel 41 vollständig in der Wärmeschutzanordnung 43 untergebracht. Der Zentralzylinder 40 ist vorzugsweise zumindest größtenteils in der Wärmeschutzanordnung 43 untergebracht. Sie erstreckt sich horizontal.

Die Kaschierbahn-Druckanordnung 31 hat außerdem eine Infrarot-Trocknungsvorrichtung 44, die in Bezug auf die endlose Kaschierbahn 30 der Inkjet-Druckvorrichtung 39 nachgeordnet und der endlosen Kaschierbahn 30 zugeordnet ist. Die Infrarot-Trocknungsvorrichtung 44 erstreckt sich horizontal und trocknet die bedruckte endlose Kaschierbahn 30 bzw. deren mindestens einen Aufdruck mittels Infrarotstrahlung. Die Infrarot-Trocknungsvorrichtung 44 ist unterhalb der Inkjet-Druckvorrichtung 39 bzw. der Wärmeschutzanordnung 43 und benachbart zu dieser angeordnet.

Stromabwärts in Bezug auf die endlose Kaschierbahn 30 ist zu der Infrarot-Trocknungsvorrichtung 44 eine Heißluft-Trocknungsvorrichtung 45 der Kaschierbahn-Druckanordnung 31 angeordnet, die der endlosen Kaschierbahn 30 zugeordnet ist und die bereits etwas getrocknete endlose Kaschierbahn 30 bzw. deren bereits etwas getrockneten Aufdruck weiter mittels Heißluft trocknet. Die Heißluft-Trocknungsvorrichtung 45 erstreckt sich vertikal und benachbart zu der Inkjet-Druckvorrichtung 39 bzw. der Wärmeschutzanordnung 43. Sie folgt unmittelbar der Infrarot-Trocknungsvorrichtung 44.

Günstigerweise hat die Kaschierbahn-Druckanordnung 31 eine Vielzahl an Umlenkrollen, um die endlose Kaschierbahn 30 zwischen den einzelnen Komponenten der Kaschierbahn-Druckanordnung 31 zu führen.

Stromabwärts zu der Heißluft-Trocknungsvorrichtung 45 hat die Wellpappeanlage eine Rückbefeuchtungsvorrichtung 46, die der endlosen Kaschierbahn 30 zugeordnet ist und diese gegenüberliegend zu der Druckseite 36 von oben befeuchtet.

Die Kaschierbahn-Druckanordnung 31 ist unter der Brücke 15 angeordnet. Die Brücke 15 hat eine vertikal beabstandet und parallel zu dem Untergrund 47 verlaufende Traganordnung 48. Die Traganordnung 48 erstreckt sich horizontal und bestimmt ein Brückenniveau. Sie verläuft oberhalb der Splicevorrichtungen 6, 7, 18, 19, 27 und der Vorrichtungen 4, 16 zum Herstellen einseitig kaschierter Wellpappebahnen 5, 17 und ist gegenüber diesen abgestützt.

Die Brücke 15 weist eine erste Hochanordnung 49 auf, die gegenüber der Traganordnung 48 aufgeständert ist und sich vorzugsweise oberhalb der zweiten Heizanordnung 24, der zweiten Vorrichtung 16 zum Herstellen einer einseitig kaschierten zweiten Wellpappebahn 17, der zweiten Materialbahn-Splicevorrichtung 19 und der Kaschierbahn-Splicevorrichtung 27 sowie der Kaschierbahn-Druckanordnung 31 erstreckt. Auf der ersten Hochanordnung 49 wird die einseitig kaschierte erste Wellpappebahn 5 gefördert. Die einseitig kaschierte erste Wellpappebahn 5 wird dort anfangs noch oben und dann horizontal gefördert. Die erste Hochanordnung 49 kann auch anders, insbesondere länger oder kürzer, ausgebildet sein.

Die Brücke 15 hat ferner eine zweite Hochanordnung 50, die gegenüber der Traganordnung 48 aufgeständert ist und unterhalb der ersten Hochanordnung 49 verläuft. Die zweite Hochanordnung 50 erstreckt sich vorzugsweise oberhalb der zweiten Materialbahn-Splicevorrichtung 19 und der Kaschierbahn-Splicevorrichtung 27 sowie der Kaschierbahn-Druckanordnung 31. Auf der zweiten Hochanordnung 50 wird die einseitig kaschierte zweite Wellpappebahn 17 gefördert. Die einseitig kaschierte zweite Wellpappebahn 17 wird dort anfangs noch oben und dann horizontal gefördert. Die zweite Hochanordnung 50 kann auch anders, insbesondere länger oder kürzer, ausgebildet sein.

Die Kaschierbahn-Druckanordnung 31 ist sowohl unterhalb der ersten Hochanordnung 49 als auch unterhalb der zweiten Hochanordnung 50 der Brücke 15 angeordnet. Die Vorbeschichtungs-Trocknungsvorrichtung 37 ist vollständig oberhalb der Traganordnung 48 angeordnet. Der Inkjet-Druckriegel 41 und die Heißluft-Trocknungsvorrichtung 45 erstrecken sich teilweise oberhalb der Traganordnung 48. Die Corona-Vorbehandlungsvorrichtung 32, die Vorbeschichtungs-Auftragsvorrichtung 35, der Zentralzylinder 40, die Infrarot-Trocknungsvorrichtung 44 und die Rückbefeuchtungsvorrichtung 46 erstrecken sich unterhalb der Traganordnung 48 der Brücke 15.

An der Brücke 15 bzw. an den Hochanordnungen 49, 50 ist in einem stromabwärtigen Endbereich eine Bahnlauf-Korrekturanordnung 51 angeordnet, die eine der einseitig kaschierten ersten Wellpappebahn 5 zugeordnete erste Bahnlauf-Korrekturvorrichtung 52 und eine der einseitig kaschierten zweiten Wellpappebahn 17 zugeordnete zweite Bahnlauf-Korrekturvorrichtung 53 umfasst. Die erste Bahnlauf-Korrekturvorrichtung 52 ist im Stande, einen Bahnlauf der einseitig kaschierten ersten Wellpappebahn 5 zu beeinflussen bzw. eine Querauslenkung derselben zu bewirken. Die zweite Bahnlauf-Korrekturvorrichtung 53 ist im Stande, einen Bahnlauf der einseitig kaschierten zweiten Wellpappebahn 17 zu beeinflussen bzw. eine Querauslenkung derselben zu bewirken.

Die Bahnlauf-Korrekturanordnung 51 ist oberhalb der Heißluft-Trocknungsvorrichtung 45 und der Rückbefeuchtungsvorrichtung 46 angeordnet. Sie ist gegenüber der Kaschierbahn-Druckanordnung 31 in der Förderrichtung 3 versetzt.

Stromabwärts zu der Bahnlauf-Korrekturanordnung 51 und der Rückbefeuchtungsvorrichtung 46 ist ein Leimwerk 54 der Wellpappeanlage angeordnet. Das Leimwerk 54 folgt unmittelbar auf die Bahnlauf-Korrekturanordnung 51 und die Rückbefeuchtungsvorrichtung 46. Ein horizontaler Abstand zwischen der Kaschierbahn-Druckanordnung 31 bzw. der Inkjet-Druckvorrichtung 39 und dem Leimwerk 54 ist äußerst gering, insbesondere kleiner als 5 m. Insbesondere fehlt eine Vorheizanordnung, die ansonsten bekanntlich dem Leimwerk 54 vorgeordnet ist, um die einseitig kaschierten Wellpappebahnen 5, 17 und die endlose Kaschierbahn 30 vor ihrer Verleimung bzw. Verklebung miteinander vorzuheizen. Die endlose Kaschierbahn 30 ist bereits durch die aktive Inkjet-Druckvorrichtung 39 ausreichend erwärmt.

Das Leimwerk 54 hat eine erste Beleimungswalze, die teilweise in ein erstes Leimbad eingetaucht ist. Die einseitig kaschierte erste Wellpappebahn 5 befindet sich mit ihrer Wellbahn in Kontakt mit der ersten Beleimungswalze und wird so mit Leim aus dem ersten Leimbad versehen. An der ersten Beleimungswalze liegt umfangsseitig eine erste Dosierwalze an, um einen gleichmäßigen Leimfilm auf der ersten Beleimungswalze auszubilden.

Ferner hat das Leimwerk 54 eine zweite Beleimungswalze, die teilweise in ein zweites Leimbad eingetaucht ist. Die einseitig kaschierte zweite Wellpappebahn 17 befindet sich mit ihrer Wellbahn in Kontakt mit der zweiten Beleimungswalze und wird so mit Leim aus dem zweiten Leimbad versehen. An der zweiten Beleimungswalze liegt umfangsseitig eine zweite Dosierwalze an, um einen gleichmäßigen Leimfilm auf der zweiten Beleimungswalze auszubilden.

Die endlose Kaschierbahn 30 läuft in dem Leimwerk 54 unterhalb der einseitig kaschierten Wellpappebahnen 5, 17.

Stromabwärts zu dem Leimwerk 54 hat die Wellpappeanlage eine Verpressvorrichtung 55, die einen über obere Führungswalzen geführten oberen Verpressgurt und einen über untere Führungswalzen geführten unteren Verpressgurt umfasst. Ein Untergurt des oberen Verpressgurts und ein Obergurt des unteren Verpressgurts verlaufen horizontal und benachbart zueinander. Sie bilden eine Verpressstrecke aus. Durch die Verpressstrecke sind die einseitig kaschierten, beleimten Wellpappebahnen 5, 17 und die endlose Kaschierbahn 30 geführt. In der Verpressvorrichtung 55 wird die endlose Wellpappebahn 1 unter Abbindung bzw. Aushärtung des Leims gebildet, die zweiseitig kaschiert und insgesamt fünflagig ist.

Stromabwärts zu der Verpressvorrichtung 55 hat die Wellpappeanlage eine Kurz-Querschneidevorrichtung 56, die einen Messerzylinder und einen unterhalb desselben angeordneten Gegenzylinder umfasst. Der Messerzylinder und Gegenzylinder sind drehbar bzw. drehantreibbar gelagert. Die Kurz-Querschneidevorrichtung 56 ist im Stande, einen Schnitt zu erzeugen, der sich über die volle Breite der endlosen Wellpappebahn 1 erstreckt. Dazu werden der Messerzylinder und Gegenzylinder derart in Rotation versetzt, dass sie beim Schneidvorgang miteinander wechselwirken. Ferner ist die Kurz-Querschneidevorrichtung 56 im Stande, einen Schnitt mit einer bestimmten Länge und einem bestimmten Abstand von einem Längsrand der endlosen Wellpappebahn 1 zu erzeugen. Dazu werden Gegenkörper-Elemente des Gegenzylinders entsprechend gewählt bzw. verstellt. Für den Schneidvorgang werden der Messerzylinder und der Gegenzylinder derart in Rotation versetzt, dass ein Messer des Messerzylinders mit den Gegenkörper-Elementen wechselwirkt.

Stromabwärts zu der Kurz-Querschneidevorrichtung 56 hat die Wellpappeanlage eine Längsschneide-/Rillvorrichtung 57 mit zwei Rilleinheiten und zwei diesen nachgeordneten Längsschneideeinheiten. Die Längsschneideeinheiten sind im Stande, die endlose Wellpappebahn 1 unter Bildung von Teil-Wellpappebahnen in der Längsrichtung 3 zu schneiden. Die Rilleinheiten sind im Stande, die endlose Wellpappebahn 1 zu rillen, um ein späteres Falten zu vereinfachen.

Alternativ ist die Kurz-Querschneidevorrichtung 56 stromabwärts zu der Längsschneide-/Rillvorrichtung 57 angeordnet.

Stromabwärts zu der Längsschneide-/Rillvorrichtung 57 ist eine Weiche 58 der Wellpappeanlage zum Aufteilen der erzeugten Teil-Wellpappebahnen in zwei unterschiedliche Ebenen vorgesehen.

Stromabwärts zu der Weiche 58 ist eine Querschneidevorrichtung 59 mit zwei übereinander angeordneten Teil-Querschneideeinrichtungen 60, 61 vorgesehen. Jede Teil-Querschneideeinrichtung 60, 61 hat zwei drehantreibbare, übereinander angeordnete, sich senkrecht zu der Förderrichtung 3 erstreckende Querschneidewalzen mit radial nach außen erstreckenden Querschneidemessern zur vollständigen Querdurchtrennung der jeweiligen Teil-Wellpappebahn unter Erzeugung von Wellpappebögen.

Stromabwärts zu jeder Teil-Querschneideeinrichtung 60, 61 ist ein Förderband angeordnet, auf dem die außenseitig bedruckten Wellpappebögen zu einer jeweiligen Stapelablage 62 bzw. 63 geführt werden.

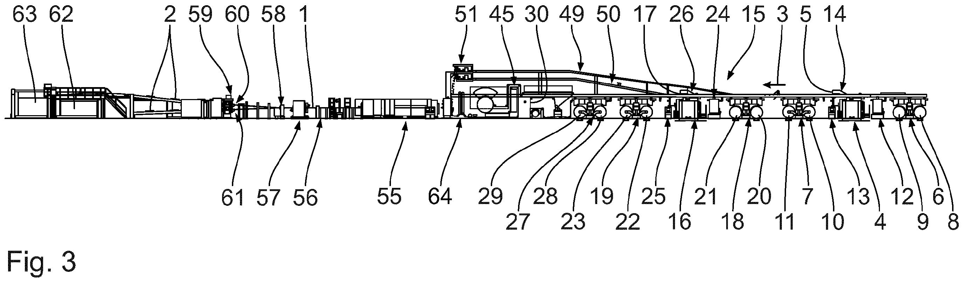

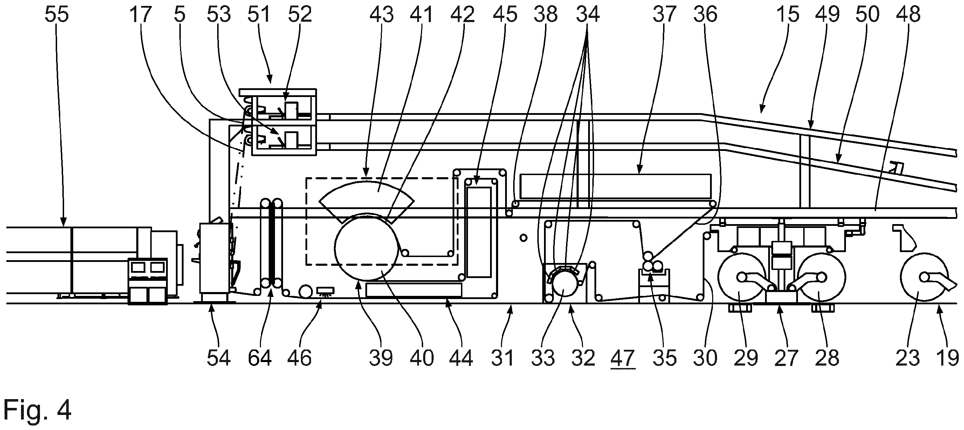

Nachfolgend wird unter Bezugnahme auf die Figuren 3, 4 eine zweite Ausführungsform beschrieben. Im Vergleich mit der ersten Ausführungsform, auf deren Beschreibung hiermit explizit verwiesen wird, ist die Kaschierbahn-Druckanordnung 31 konstruktiv anders aufgebaut. Die Abfolge der Corona-Vorbereitungsvorrichtung 32, der Vorbeschichtungs-Auftragsvorrichtung 35, der Vorbeschichtungs-Trocknungsvorrichtung 37, der Inkjet-Druckvorrichtung 39, der Infrarot-Trocknungsvorrichtung 44 und der Heißluft-Trocknungsvorrichtung 45 ist zwar identisch, jedoch sind diese anders in der Wellpappeanlage platziert. Auch die Führung der endlosen Kaschierbahn 30 in der Kaschierbahn-Druckanordnung 31 ist anders.

Stromabwärts zu der Infrarot-Trocknungsvorrichtung 44 ist wieder die Rückbefeuchtungsvorrichtung 46 angeordnet. Stromabwärts in Bezug auf die endlose Kaschierbahn 30 ist zu der Rückbefeuchtungsvorrichtung 46 eine Wendestangenanordnung 64 angeordnet, die unterhalb der Bahnlauf-Korrekturanordnung 51 angeordnet und dem Leimwerk 54 vorgeordnet ist. Die endlose Kaschierbahn 30 ist um Wendestangen der Wendestangenanordnung 64 derart geführt, dass stromabwärts zu der Wendestangenanordnung 64 die Druckseite 36 der endlosen Kaschierbahn 30 nach unten gerichtet ist. Davor ist die Druckseite 36 nach oben gerichtet.

## Patentansprüche

1. Wellpappeanlage zum Herstellen von Wellpappe, umfassend
a) mindestens eine Vorrichtung (4, 16) zum Herstellen einer jeweiligen einseitig kaschierten Wellpappebahn (5, 17) aus einer jeweiligen Deckbahn und Materialbahn,
b) eine Kaschierbahn-Abgabevorrichtung (27) zum Abgeben einer Kaschierbahn (30),
c) eine der Kaschierbahn-Abgabevorrichtung (27) nachgeordnete Kaschierbahn-Druckanordnung (31) zum Bedrucken der Kaschierbahn (30), und
d) eine der Kaschierbahn-Druckanordnung (31) nachgeordnete Vorrichtung (55) zum Herstellen einer zweiseitig kaschierten Wellpappebahn (1) aus der mindestens einen einseitig kaschierten Wellpappebahn (5, 17) und der Kaschierbahn (30),
e) wobei die Kaschierbahn-Druckanordnung (31) unter einer Brücke (15) zur Führung der mindestens einen einseitig kaschierten Wellpappebahn (5, 17) in Richtung auf die Vorrichtung (55) zum Herstellen einer zweiseitig kaschierten Wellpappebahn (1) angeordnet ist,
**dadurch gekennzeichnet, dass**
f) die Brücke (15) mindestens eine Abschirmanordnung zum Reduzieren einer Austrocknung der mindestens einen in der Brücke (15) geführten, einseitig kaschierten Wellpappebahn (5, 17) umfasst.

2. Wellpappeanlage nach Anspruch 1, **dadurch gekennzeichnet, dass** die mindestens eine Vorrichtung (4, 16) zum Herstellen einer jeweiligen einseitig kaschierten Wellpappebahn (5, 17) und die Kaschierbahn-Abgabevorrichtung (27) sowie die Kaschierbahn-Druckanordnung (31) in einer Reihe, insbesondere in einer Förderrichtung (3) der Wellpappeanlage, angeordnet sind.

3. Wellpappeanlage nach Anspruch 1 oder 2, **dadurch gekennzeichnet, dass** die mindestens eine Abschirmanordnung mindestens eine Seitenwand und/oder Decke umfasst.

4. Wellpappeanlage nach Anspruch 3, **dadurch gekennzeichnet, dass** die mindestens eine Abschirmanordnung seitlich und nach oben geschlossen ist.

5. Wellpappeanlage nach Anspruch 3 oder 4, **dadurch gekennzeichnet, dass** die mindestens eine Abschirmanordnung als Einhausung und/oder Umhausung ausgeführt ist.

6. Wellpappeanlage nach einem der vorherigen Ansprüche, **dadurch gekennzeichnet, dass** sich die mindestens eine Abschirmanordnung zumindest bereichsweise längs der Brücke (15) in einer Förderrichtung der mindestens einen dort geförderten einseitig kaschierten Wellpappebahn (5, 17) erstreckt.

7. Wellpappeanlage nach Anspruch 6, **dadurch gekennzeichnet, dass** sich die mindestens eine Abschirmanordnung in der Förderrichtung über mindestens 10 Meter erstreckt.

8. Wellpappeanlage nach einem der vorherigen Ansprüche, **dadurch gekennzeichnet, dass** die mindestens eine Abschirmanordnung aus einem Dämmmaterial gebildet ist.

## Claims

1. Corrugated cardboard plant for producing corrugated cardboard, comprising
a) at least one device (4, 16) for producing a respective corrugated cardboard web (5, 17) laminated on one side from a respective cover web and a respective material web;
b) a lamination web dispensing device (27) for dispensing a lamination web (30);
c) a lamination web printing assembly (31), disposed downstream of the lamination web dispensing device (27), for imprinting the lamination web (30); and
d) a device (55), disposed downstream of the lamination web printing assembly (31), for producing a corrugated cardboard web (1) laminated on two sides from the at least one corrugated cardboard web (5, 17) laminated on one side and the lamination web (30),
e) wherein the lamination web printing assembly (31) is disposed below a bridge (15) for guiding the at least one corrugated cardboard web (5, 17) laminated on one side in a direction towards the device (55) for producing a corrugated cardboard web (1) laminated on two sides,
**characterized in that**
f) the bridge (15) comprises at least one shield assembly for reducing a drying-up of the at least one corrugated cardboard web (5, 17) laminated on one side that is guided in the bridge (15).

2. Corrugated cardboard plant according to Claim 1, **characterized in that** the at least one device (4, 16) for producing a respective corrugated cardboard web (5, 17) laminated on one side, and the lamination web dispensing device (27), and the lamination web printing assembly (31) are disposed in one row, in particular in a conveying direction (3) of the corrugated cardboard plant.

3. Corrugated cardboard plant according to Claim 1 or 2, **characterized in that** the at least one shield assembly comprises at least one side wall and/or cover.

4. Corrugated cardboard plant according to Claim 3, **characterized in that** the at least one shield assembly is closed off laterally and towards the top.

5. Corrugated cardboard plant according to Claim 3 or 4, **characterized in that** the at least one shield assembly is embodied as a housing and/or an encapsulation.

6. Corrugated cardboard plant according to one of the preceding Claims, **characterized in that** the at least one shield assembly, at least in regions, extends along the bridge (15) in a conveying direction of the at least one corrugated cardboard web (15, 17) laminated on one side that is conveyed there.

7. Corrugated cardboard plant according to Claim 6, **characterized in that** the at least one shield assembly extends across at least 10 metres in the conveying direction.

8. Corrugated cardboard plant according to one of the preceding Claims, **characterized in that** the at least one shield assembly is formed from an insulation material.

## Revendications

1. Installation à cartons ondulés pour la fabrication de carton ondulé, comprenant
a) au moins un dispositif (4, 16) pour la fabrication d'une bande de carton ondulé (5, 17) contrecollée d'un côté respective à partir d'une bande de recouvrement et d'une bande de matériau respectives,
b) un dispositif de sortie de bande contrecollée (27) pour la sortie d'une bande contrecollée (30),
c) un agencement d'impression de bande contrecollée (31) agencé en aval du dispositif de sortie de bande contrecollée (27) pour l'impression de la bande contrecollée (30), et
d) un dispositif (55) agencé en aval de l'agencement d'impression de bande contrecollée (31) pour la fabrication d'une bande de carton ondulé (1) contrecollée des deux côtés à partir de l'au moins une bande de carton ondulé (5, 17) contrecollée d'un côté et de la bande contrecollée (30),
e) dans laquelle l'agencement d'impression de bande contrecollée (31) est agencé sous un pont (15) pour le guidage de l'au moins une bande de carton ondulé (5, 17) contrecollée d'un côté en direction du dispositif (55) pour la fabrication d'une bande de carton ondulé (1) contrecollée des deux côtés,
**caractérisée en ce que**
f) le pont (15) comporte au moins un agencement de blindage pour la réduction d'un dessèchement de l'au moins une bande de carton ondulé (5, 17) contrecollée d'un côté, guidée dans le pont (15).

2. Installation à cartons ondulés selon la revendication 1, **caractérisée en ce que** l'au moins un dispositif (4, 16) pour la fabrication d'une bande de carton ondulé (5, 17) contrecollée d'un côté respective et le dispositif de sortie de bande contrecollée (27) ainsi que l'agencement d'impression de bande contrecollée (31) sont agencés dans une rangée, en particulier dans un sens de transport (3) de l'installation à cartons ondulés.

3. Installation à cartons ondulés selon la revendication 1 ou 2, **caractérisée en ce que** l'au moins un agencement de blindage comporte au moins une paroi latérale et/ou un plafond.

4. Installation à cartons ondulés selon la revendication 3, **caractérisée en ce que** l'au moins un agencement de blindage est fermé latéralement et vers le haut.

5. Installation à cartons ondulés selon la revendication 3 ou 4, **caractérisée en ce que** l'au moins un agencement de blindage est réalisé comme boîtier et/ou enceinte.

6. Installation à cartons ondulés selon l'une des revendications précédentes, **caractérisée en ce que** l'au moins un agencement de blindage s'étend au moins par endroits le long du pont (15) dans un sens de transport de l'au moins une bande de carton ondulé (5, 17) contrecollée d'un côté qui y est transportée.

7. Installation à cartons ondulés selon la revendication 6, **caractérisée en ce que** l'au moins un agencement de blindage s'étend dans le sens de transport sur au moins 10 mètres.

8. Installation à cartons ondulés selon l'une des revendications précédentes, **caractérisée en ce que** l'au moins un agencement de blindage est formé en un matériau isolant.
